# EUROPÄISCHE PATENTSCHRIFT

(11) **EP 0 639 719 B1**
(45) Veröffentlichungstag und Bekanntmachung des Hinweises auf die Patenterteilung: **11.02.1998**
(21) Anmeldenummer: 94112582.5
(22) Anmeldetag: 11.08.1994
(51) Int. Cl.: F16B 19/10

(54) **Blindniet**
Blind rivet
Rivet aveugle

(30) Priorität: 16.08.1993 DE 9312228 U
(43) Veröffentlichungstag der Anmeldung: 22.02.1995
(73) Patentinhaber: VVG Befestigungstechnik Beteiligungs-GmbH, D-58730 Fröndenberg (DE)
(72) Erfinder: Jost, Uwe, D-58708 Menden (DE); Schulte, Klaus, D-59439 Holzwickede (DE)
(74) Vertreter: Grünecker, Kinkeldey, Stockmair & Schwanhäusser Anwaltssozietät

(56) Entgegenhaltungen:
- EP-A- 0 456 431
- WO-A-86/04965
- WO-A-89/08204
- DE-A- 3 923 263
- GB-A- 2 060 110

## Beschreibung

Die Erfindung bezieht sich auf einen Blindniet mit einer Niethülse und einem in der Niethülse angeordneten Nietdorn, der einen Kopf und unterhalb seines Kopfes mindestens einen schraubenförmig verlaufenden, auf seiner Mantelfläche angeordneten Steg aufweist, wobei der Steg im vernieteten Zustand durch eine vorherige, vom Nietsetzgerät verursachte Dreh-Zugbewegung beim Setzvorgang einen Schraubengang in die Innenoberfläche der Niethülse einformt.

Ein solcher Niet ist aus der DE 39 23 263 A1 bekannt. Der Blindniet wird hauptsächlich dort angeordnet, wo es wichtig ist, daß ein unliebsames Lösen des Nietdornrests beim gesetzten Blindniet vermieden werden soll. Hierzu graben sich die gewindeähnlichen Erhöhungen am Nietdorn in die Innenoberfläche der Niethülse ein. Im großen und ganzen hat sich diese Ausbildung eines Nietdorns bewährt, jedoch ist es in Einzelfällen unter extrem großer Vibrationsbelastung dennoch zum Lösen des Nietdornrests am gesetzten Blindniet gekommen. Der gelöste Nietdornrest kann nunmehr unter Vibrationsbelastung Geräusche hervorrufen, die in einigen Bereichen der Technik, z.B. im Automobilbau, sehr unerwünscht sind.

Aus der WO86/04965 ist ein Blindniet für Schiffscontainer und ähnliches bekannt. Der Blindniet umfaßt eine Niethülse und einen darin angeordneten Nietdorn. Der Nietdorn weist einen Kopf auf, einen im Abstand vom Kopf angeordneten Schließwulst mit zugeordneter Schließnut und einen im Abstand hierzu angeordneten schraubenförmigen Keilnutprofilbereich. Beim Setzvorgang wird durch das Nietsetzwerkzeug eine axiale Zugkraft am Nietdorn aufgebracht, wobei sich das Nietsetzwerkzeug gleichzeitig an der Niethülse abstützt. Der Keilnutbereich dringt in einen Bereich annähernd gleichen Durchmessers der Niethülse ein. Der Schließwulst bewegt Hülsenmaterial radial einwärts in die Schließnut, um einen Schließring zu formen. Das Hülsenmaterial wird fließgepreßt, um im wesentlichen die Schließnut zu füllen. Dabei sorgt der Keilnutbereich bei der Formung des Schließrings durch das Reduzieren der Querschnittsfläche und der Werkstoffmasse, die in die Schließnut von dem Schließwulst bewegt werden muß, für einen Vorteil. Aus diesem Grunde wird die Krafterzeugung des Schließrings relativ gering gehalten. Der Keilnutbereich stellt eine im wesentlichen vorhersagbare radiale Breite der Hülsenschulter bereit, die in Eingriff mit dem Schließwulst kommt.

Aus der WO89/08204 ist ein Blindniet für Schiffscontainer oder ähnliches bekannt, bei dem ein mit Keilnuten versehener Bereich des Nietdorns sich in einen engeren Bohrungsbereich der Niethülse eingräbt. Die Erhöhungen des Keilnutprofils weisen zwar über ihre Länge einen im wesentlichen gleichmäßigen Außendurchmesser auf, laufen jedoch vom Kopf des Nietdorns wegweisend spitz zu. Hierdurch soll die Eindringkraft des Keilnutbereiches in die Niethülse verringert werden, wodurch sich die Niethülse relativ zum Zugdorn drehen lassen soll. Vom Nietsetzgerät wird eine axiale Zugkraft aufgebracht, wobei sich dieses zusätzlich an den Kopf der Niethülse abstützt.

Es ist daher die Aufgabe der vorliegenden Erfindung, einen gattungsgemäßen Blindniet bereitzustellen, der eine dauerhafte Fixierung des Nietdornrests beim gesetzten Blindniet aufweist.

Diese Aufgabe wird erfindungsgemäß dadurch gelöst, daß am Nietdorn zwischen Kopf und Steg eine über die Mantelfläche des Nietdorns hervorstehende Räumkante quer zur Längserstreckung des schraubenförmig verlaufenden Stegs angeordnet ist, die beim Setzvorgang den in die Innenfläche der Niethülse von dem Steg eingeformten Gewindegang zumindest teilweise verformt.

Durch die Verformung des Gewindegangs wird dem Nietdornrest am gesetzten Blindniet jegliche Möglichkeit genommen, sich entlang dieses Gewindegangs, z.B. durch Vibrationen, hinauszuschrauben. Unliebsame Geräusche, die durch ein Lösen des Nietdornbruchstücks verursacht werden könnten, sind somit gänzlich vermieden. Unter einer teilweisen Verformung des Gewindegangs ist in diesem Zusammenhang auch eine teilweise gänzliche Zerstörung des Gewindegangs gemeint.

In einer Ausführungsform kann die Räumkante von einem erweiterten Durchmesserbereich am Nietdorn gebildet sein, dessen radiale Erweiterung im wesentlichen der Höhe des Stegs entspricht. Diese Ausführungsform ist besonders einfach herzustellen und dennoch sehr effektiv, da ein Bereich des Hülseninnendurchmessers im gesamten verformt und verdrängtes Material in den Gewindegang hineingedrückt wird.

In einer weiteren Ausführungsform kann die Räumkante von einem erweiterten Polygonbereich am Nietdorn gebildet sein, dessen mittlere radiale Erweiterung im wesentlichen der Höhe des Stegs entspricht. Durch ein Polygon werden viele kleine Schneidkanten gebildet, die entsprechend so ausgerichtet sein können, daß sie gezielt den Gewindegang verformen.

In einer dritten Ausführungsform können die Räumkanten von einem keilnutförmigen Profilbereich am Nietdorn gebildet sein, dessen Nuten in schraubenförmiger Verlängerung des Stegs angeordnet sind. Hierdurch formt sich jeweils eine Erhebung neben dem Gewindegang in die Innenfläche der Niethülse ein, weshalb sich durch die plastische Verformung der Gewindegang ebenfalls verformt.

Vorteilhaft ist auch eine Anordnung, bei der mehrere Räumkanten axial versetzt auf einem Bereich am Nietdorn angeordnet sein können. Hierdurch ist eine gestaffelte Verformung des Gewindegangs möglich, wodurch die für die Verformung benötigte Kraft reduziert werden kann.

Wenn der Steg ein im wesentlichen keilförmiges, selbstschneidendes Außengewinde mit im wesentlichen scharfen Schneidkanten bildet, wird in die Niethülse ein Gewindegang eingeschnitten, ohne die Niethülse im Innendurchmesserbereich nennenswert, insbesondere radial, zu verformen.

Günstigerweise kann der Steg in seiner Draufsicht als Dreieck ausgebildet sein, dessen Spitze vom Kopf des Nietdorn wegweist. Durch diese Ausgestaltung kann der Steg besser verformend in die Innenoberfläche der Niethülse eindringen. Hierzu kann auch günstigerweise der Steg in seiner Seitenansicht als Dreieck ausgebildet sein, dessen Spitze vom Kopf des Nietdorns wegweist. Hierdurch erhält der Steg ein pfeilförmiges Profil, wodurch die Verformungskraft verringert werden kann, wodurch ein widerstandsarmes Einschneiden des Steges zum Formen eines schraubenförmigen Ganges erfolgt.

Vorteilhafterweise können mehrere radial zueinander versetzte Stege auf dem Außenmantel des Nietdorns angeordnet sein. Durch die Vervielfachung der Anlagenflächen von Steg und Niethülse ist das Nietdornbruchstück nach dem Setzen wesentlich besser innerhalb der Niethüls gesichert.

In einer weiteren bevorzugten Ausführungsform weist der Kopf ein radial am Nietdorn bestehendes Profil auf. Günstig ist es hierbei, wenn der die Räumkante tragende Bereich mit Abstand zur Unterseite des Kopfes angeordnet ist. Hierdurch kann beim Setzen des Blindniets zusätzlich Material von der Niethülse in diesen Zwischenbereich hineingedrückt werden, wodurch eine zusätzliche Sicherung bereitgestellt ist.

In einer weiteren Ausführungsform kann die Räumkante und der Steg mit Abstand zueinander angeordnet sein. Dieser Zwischenraum kann zur Ansammlung von verformten Material in der Niethülse dienen.

Zur Erleichterung des Setzvorgangs kann der Nietdorn an seinem dem Kopf abgewandten Endbereich eine Profilierung zur Aufnahme in einem Nietsetzwerkzeug aufweisen.

Vorteilhafterweise kann die Niethülse einen radial überstehenden Flansch und an ihrem dem Flansch abgewandten Ende einen sich stufenförmig erweiternden Bohrungsbereich aufweisen, dessen radiale Erweiterung etwa der Höhe des Stegs entspricht. Hierdurch kann der Steg im unvernieteten Zustand des Nietdorns innerhalb der Niethülse positioniert sein, wodurch sich unter anderem die Verletzungsgefahr, die von einem scharfkantigen Steg ausgeht, verringert ist. Dabei ist es günstig, wenn die Länge des Bohrungsbereichs so gewählt ist, daß im unvernieteten Zustand der Steg am Ende des Bohrungsbereichs anstößt und die Räumkante außerhalb der Hülse angeordnet ist.

Von Vorteil ist es, wenn der Kopf im vernieteten Zustand in das Innere der Niethülse eingezogen ist und vom Endbereich der Niethülse im wesentlichen formschlüssig umschlossen ist. Durch die Einformung des Kopfes innerhalb der Niethülse wird eine weitere Sicherung gegen Lösen des Nietdornreststückes erreicht.

Günstigerweise kann die Niethülse an ihrem Flanschende einen verengten Durchmesserbereich aufweisen, der reibschlüssig den Nietdorn im unvernieteten Zustand in Position hält.

Im folgenden werden einige Ausführungsformen der vorliegenden Erfindung anhand einer Zeichnung näher erläutert. Es zeigt:
- Fig. 1: eine Ausführungsform eines erfindungsgemäßen Blindnietes im Halbschnitt,
- Fig. 2: den Nietdorn aus Figur 1,
- Fig. 3: die Niethülse aus Figur 1 im Halbschnitt,
- Fig. 4: einen vernieteten Blindniet gemäß der Ausführungsform aus Figur 1,
- Fig. 5: eine zweite Ausführungsform eines Nietdorns, und
- Fig. 6: eine dritte Ausführungsform eines Nietdorns.

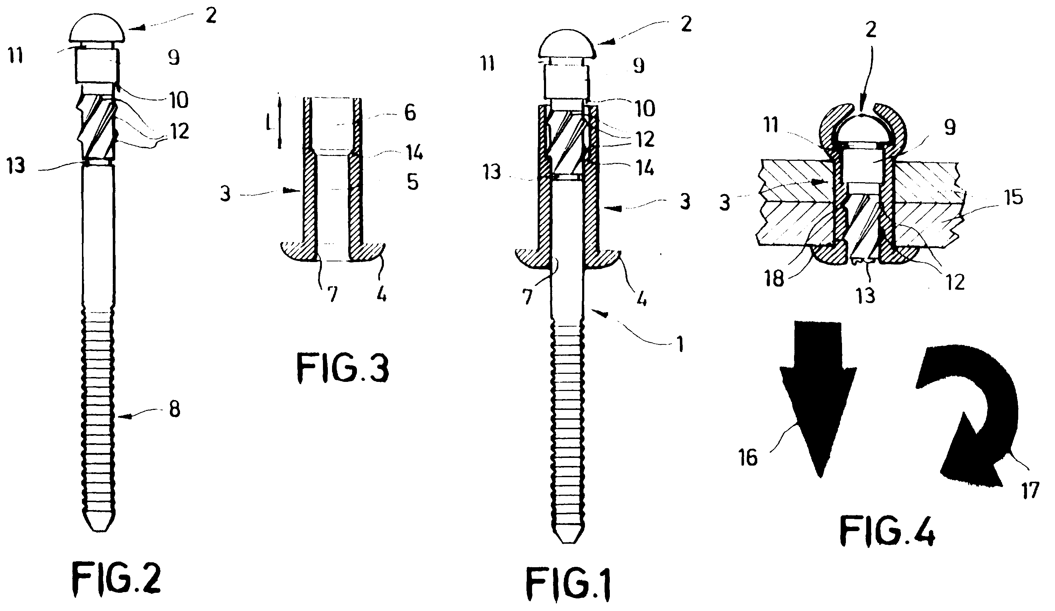

Im folgenden wird eine erste Ausführungsform der vorliegenden Erfindung anhand der Figuren 1 bis 4 beschrieben. Der Blindniet umfaßt einen Nietdorn 1 mit einem Kopf 2, der vevorzugt halbkugelförmiges Profil aufweist, und eine Niethülse 3 mit einem radial nach außen überstehenden Flansch 4. Die Niethülse 3 weist eine Hülsenbohrung 5 auf, die an dem, dem Flansch 4 gegenüberliegendem Endbereich der Niethülse 3 in einen erweiterten Bohrungsbereich 6 übergeht, der koaxial zur Hülsenbohrung 5 angeordnet ist. Die Niethülse 3 weist mit Ausnahme ihres Flansches 4 eine durchgehende zylindrische Außenmantelfläche auf. Desweiteren weist die Niethülse an ihrem Flanschende einen geringfügig verengten Durchmesserbereich 7 auf.

Der Nietdorn 1 weist an seinem, dem Kopf 2 abgewandten Endbereich eine Profilierung 8 zur Aufnahme in einem Nietsetzwerkzeug (nicht dargestellt) auf. Unterhalb des Kopfes 2 ist am Nietdorn ein erweiterter Durchmesserbereich 9 angeordnet, der mit seiner Mantelfläche und Unterseite eine umlaufende Räumkante 10 bildet. Der erweiterte Durchmesserbereich 9 und der Kopf 2 sind mit Abstand zueinander angeordnet, so daß eine Ringnut 11 gebildet wird. In einigem Abstand unterhalb der Räumkante 10 sind schraubenförmig verlaufende Stege 12 auf der Mantelfläche des Nietdorns 1 eingeordnet. Dabei sind mehrere radial zueinander versetzte Stege 12 auf dem Außenmantel des Nietdorns 1 geformt. Die Stege 12 weisen annähernd eine Pyramidenform auf, so daß sie in ihrer Draufsicht und Seitenansicht jeweils als Dreieck ausgebildet sind, dessen Spitze vom Kopf 2 des Nietdorns 1 wegweist. Durch diese Ausgestaltung erhalten die Stege 12 relativ scharfe Schneidkanten, die besonders widerstandsarm in die Niethülse 3 einschneiden können. Direkt unterhalb der Stege 12 ist am Nietdorn 1 eine Sollbruchstelle 13 eingeformt. Die radiale Erweiterung des erweiterten Durchmesserbereichs 9 entspricht beim Nietdorn 1 im wesentlichen der größten Höhe eines Stegs 12.

Der erweiterte Durchmesserbereich 6 weist einen solchen Durchmesser auf, daß der Nietdorn 1 mit seinen Stegen 12 in diese hineingeschoben ist. Die stufenförmige Erweiterung 14 am Ende des erweiterten Bogenbereichs 6 dient hierbei als Anschlag für den Nietdorn 1 in unvernietetem Zustand des Blindniets. Durch den verengten Durchmesserbereich 7 wird der Nietdorn 1 im unvernieteten Zustand reibschlüssig in Position gehalten. Der Durchmesser des erweiterten Bohrungsbereichs 6 entspricht weiterhin ungefähr dem Durchmesser des erweiterten Durchmesserbereichs 9. Die Länge L des erweiterten Durchmesserbereichs 6 ist so gewählt, daß im unvernieteten Zustand nach Anschlagen der Stege 12 an der stufenförmigen Erweiterung 14 die Räumkante 10 außerhalb der Niethülse 3 angeordnet ist.

Im folgenden wird die Funktionsweise dieser Ausführungsform insbesondere anhand der Figur 4 näher erläutert.

Zur Erstellung einer Blindnietverbindung mit dem erfindungsgemäßen Blindniet wird dieser in einer entsprechenden Bohrung in zu verbindenden Teilen 15 eingeführt. Nachdem die Rückseite des Flansches 4 an einer Teileoberfläche anstößt, wird mit Hilfe eines Nietsetzwerkzeuges (nicht dargestellt) eine axiale Zugkraft, die bildlich durch den Pfeil 16 dargestellt ist, und eine gleichzeitige Ausführung einer Drehbewegung, die bildlich durch den Pfeil 17 dargestellt ist, der Blindniet gesetzt.

Durch die Zug- und Drehbewegung formen sich die pyramidenförmigen Stewge 12 in die Innenoberfläche der Hülsenbohrung 5 ein und erzeugen Gewindegänge 18. Dieser Vorgang entspricht im wesentlichen einem Schneidvorgang durch ein durch die Stege 12 gebildeten mehrgängigen, selbstschneidenden Außengewinde. Gleichzeitig wird der erweiterte Durchmesserbereich 9 mit seiner Räumkante 10 in den erweiterten Bohrungsbereich 6 eingeführt. Sobald die Räumkante 10 die stufenförmige Erweiterung 14 erreicht hat, werden die Gewindegänge 18 von der Räumkante 10 verformt, indem Werkstoff von den neben den Gewindegängen verbleibenden Bereiche der Innenoberfläche der Hülsenbohrung 5 verformt oder abgetragen wird. Der verformte oder abgetragene Werkstoff dringt somit in die Gewindegänge 18 ein und verschließt diese dadurch. Der Kopf 2 dringt auch in den erweiterten Bohrungsbereich 6 ein, bewirkt aber durch seinen größeren Durchmesser als der erweiterte Durchmesser 9 eine Verformung dieses Endbereichs der Niethülse 3. Der Nietkopf 2 quetscht Material in den Ringspalt 11 ein und bewirkt, daß sich der Rest der Niethülse 3 im erweiterten Bohrungsbereich 6 im wesentlichen formschlüssig an den Kopf 2 anlegt und einen Wulst bildet, der an seinem unteren Bereich an der Rückseite der zu verbindenen Teile 15 anliegt. Die Teile 15 sind somit zwischen dem Flansch 4 und dem Wulst positioniert. Die Räumkante 10 zerstört somit ein Teil der Gewindegänge und verhindert dadurch ein Herausdrehen des Nietdorns 1.

Nach Erreichen einer bestimmten Höchstkraft reißt der Nietdorn 1 an seiner Sollbruchstelle 13 ab. Die Lage der Sollbruchstelle 13 ist bevorzugt so gewählt, daß das in der Nietverbindung verbleibende Bruchstück nicht über den Flansch 4 der Niethülse 3 hinaussteht.

Durch das Verformen der Gewindegänge 18 und dem in die Ringnut 11 eingedrungenen Material ist somit eine gänzliche Verdrehsicherung und somit ein Lösen des Nietdornbruchstücks unmöglich geworden. Diese Nietverbindung garantiert selbst bei stärksten Vibrationsbelastungen, daß sich ein Lösen des Nietdornbruchstücks nicht durch unliebsame Geräusche bemerkbar macht.

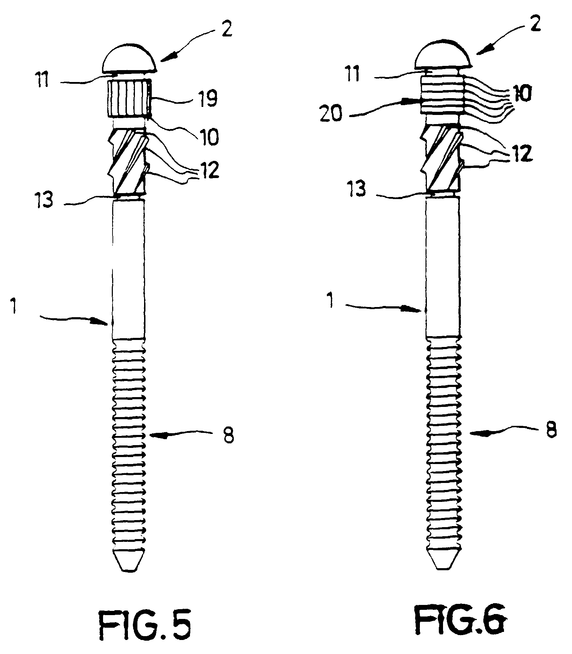

Figur 5 zeigt eine weitere Ausführungsform eines erfindungsgemäßen Nietdorns 1, dessen Räumkante 10 von einem erweiterten Polygonbereich 19 am Nietdorn 1 gebildet ist, dessen mittlere radiale Erweiterung im wesentlichen der Höhe der Stege 12 entspricht. Eine weitere Ausführungsform eines erfindungsgemäßen Nietdorns 1 zeigt Figur 6. In dieser Ausführungsform sind mehrere Räumkanten 10 axial versetzt auf einem Bereich 20 am Nietdorn 1 angeordnet.

Die Räumkante 10 kann durch beliebige radial abstehende Profilierungen am Nietdorn 1 erzeugt werden, hier sei nur z.B. zu nennen, daß die Räumkante 10 von einem keilnutförmigen Profilbereich am Nietdorn gebildet sein kann, dessen Nuten in schraubenförmiger Verlängerung der Stege 12 angeordnet sind.

Dadurch, daß am Nietdorn 1 zwischen Kopf 2 und Stegen 12 eine über die Mantelfläche des Nietdorns 1 hervorstehende Räumkante 10 quer zur Längserstreckung der schraubenförmige verlaufenden Stege 12 angeordnet ist, die beim Setzvorgang die in die Innenfläche der Niethülse von den Stegen 12 eingeformten Gewindegänge 18 zumindest teilweise verformen, wird die der Erfindung zugrundeliegende Aufgabe bestens gelöst.

## Patentansprüche

1. Blindniet mit einer Niethülse (3) und einem in der Niethülse (3) angeordneten Nietdorn (1), der einen Kopf (2) und unterhalb seines Kopfes (2) mindestens einen schraubenförmig verlaufenden, auf seiner Mantelfläche angeordneten Steg (12) aufweist, wobei der Steg (12) im vernieteten Zustand durch eine vorherige, vom Nietsetzgerät verursachte Dreh-Zugbewegung beim Setzvorgang einen Gewindegang (18) in die Innenoberfläche der Niethülse (3) einformt,
**dadurch gekennzeichnet**,
daß am Nietdorn (1) zwischen Kopf (2) und Steg (12) eine über die Mantelfläche des Nietdorns (1) hervorstehende Räumkante (10) quer zur Längserstreckung des schraubenförmig verlaufenden Stegs (12) angeordnet ist, die beim Setzvorgang den in die Innenfläche der Niethülse (3) von dem Steg (12) eingeformten Gewindegang (18) zumindest teilweise verformt.

2. Blindniet nach Anspruch 1, **dadurch gekennzeichnet**, daß die Räumkante (10) von einem erweiterten Durchmesserbereich (9) am Nietdorn (1) gebildet ist, dessen radiale Erweiterung im wesentlichen der Höhe des Stegs (12) entspricht.

3. Blindniet nach Anspruch 1, **dadurch gekennzeichnet**, daß die Räumkante (10) von einem erweiterten Polygonbereich (19) am Nietdorn (1) gebildet ist, dessen mittlere radiale Erweiterung im wesentlichen der Höhe des Stegs (12) entspricht.

4. Blindniet nach Anspruch, 1
**dadurch gekennzeichnet**,
daß die Räumkante (10) von einem keilnutförmigen Profilbereich am Nietdorn (1) gebildet ist, dessen Nuten in schraubenförmiger Verlängerung des Stegs (12) angeordnet sind.

5. Blindniet nach einem der Ansprüche 1 bis 4, **dadurch gekennzeichnet**, daß mehrere Räumkanten (10) axial versetzt auf einem Bereich (20) am Nietdorn (1) angeordnet sind.

6. Blindniet nach einem der Ansprüche 1 bis 5, **dadurch gekennzeichnet**, daß der Steg (12) ein im wesentlichen keilförmiges, selbstschneidendes Außengewinde mit im wesentlichen scharfen Schneidkanten bildet.

7. Blindniet nach einem der Ansprüche 1 bis 6, **dadurch gekennzeichnet**, daß der Steg (12) in seiner Draufsicht als Dreieck ausgebildet ist, dessen Spitze vom Kopf (2) des Nietdorns (1) wegweist.

8. Blindniet nach einem der Ansprüche 1 bis 7, **dadurch gekennzeichnet**, daß der Steg (12) in seiner Seitenansicht als Dreieck ausgebildet ist, dessen Spitze vom Kopf (2) des Nietdorns (1) wegweist.

9. Blindniet nach einem der Ansprüche 1 bis 8, **dadurch gekennzeichnet**, daß mehrere radial zueinander versetzte Stege (12) auf dem Außenmantel des Nietdorns (1) angeordnet sind.

10. Blindniet nach einem der Ansprüche 1 bis 9, **dadurch gekennzeichnet**, daß der Kopf (2) ein radial am Nietdorn (1) überstehendes Profil aufweist.

11. Blindniet nach einem der Ansprüche 1 bis 10, **dadurch gekennzeichnet**, daß der die Räumkante (10) tragende Bereich (9, 19, 20) mit Abstand zur Unterseite des Kopfes (2) angeordnet ist.

12. Blindniet nach einem der Ansprüche 1 bis 11, **dadurch gekennzeichnet**, daß die Räumkante (10) und der Steg (12) mit Abstand zueinander angeordnet sind.

13. Blindniet nach einem der Ansprüche 1 bis 12, **dadurch gekennzeichnet**, daß der Nietdorn (1) unterhalb der vom Kopf (2) abgewandten Seite des Stegs (12) eine eingeformte Sollbruchstelle (13) aufweist.

14. Blindniet nach einem der Ansprüche 1 bis 13, **dadurch gekennzeichnet**, daß der Nietdorn (1) an seinem dem Kopf (2) abgewandten Endbereich eine Profilierung (8) zur Aufnahme in einem Nietsetzwerkzeug aufweist.

15. Blindniet nach einem der Ansprüche 1 bis 14, **dadurch gekennzeichnet**, daß die Niethülse (3) einen radial überstehenden Flansch (4) und an ihrem dem Flansch (4) abgewandten Ende einen sich stufenförmig erweiternden Bohrungsbereich (6) aufweist, dessen radiale Erweiterung etwa der Höhe des Stegs (12) entspricht.

16. Blindniet nach einem der Ansprüche 1 bis 15, **dadurch gekennzeichnet**, daß die Länge des Bohrungsbereichtungs (6) so gewählt ist, daß im unvernieteten Zustand der Steg (12) am Ende (14) des Bohrungsbereichs (6) anstößt und die Räumkante (10) außerhalb der Hülse (3) angeordnet ist.

17. Blindniet nach einem der Ansprüche 1 bis 16, **dadurch gekennzeichnet**, daß der Kopf (2) im vernieteten Zustand in das Innere der Niethülse (3) eingezogen ist und vom Endbereich der Niethülse (3) im wesentlichen formschlüssig umschlossen ist.

18. Blindniet nach einem der Ansprüche 1 bis 17, **dadurch gekennzeichnet**, daß die Niethülse (3) an ihrem Flanschende einen verengten Durchmesserbereich aufweist, der reibschlüssig den Nietdorn (1) im unvernieteten Zustand in Position hält.

19. Verfahren zur Herstellung einer Blindnietverbindung, bei dem auf den Blindniet eine axiale Zugkraft und gleichzeitig eine Drehbewegung zum Setzen des Blindnietes durch ein Nietsetzgerät aufgebracht wird, so daß mindestens ein schraubenförmiger Steg am Nietdorn einen Gewindegang in der Innenoberfläche der Niethülsenbohrung erzeugt,
**dadurch gekennzeichnet**,
daß eine Räumkante am Nietdorn den am Setzvorgang in die Innenoberfläche der Niethülse von dem Steg eingeformten Gewindegang zumindest teilweise verformt.

20. Verfahren nach Anspruch 19,
**dadurch gekennzeichnet**,
daß die Räumkante den Werkstoff von den neben den Gewindegängen verbleibenden Bereiche der Innenoberfläche der Hülsenbohrung verformt oder abträgt, wobei der verformte oder abgetragene Werkstoff in die Gewindegänge eindringt und diese verschließt.

## Claims

1. Blind rivet with a rivet sleeve (3) and a rivet pin (1) which is arranged in the rivet sleeve (3) and comprises a head (2) and beneath its head (2) at least one helically extending web (12) arranged on its cylindrical surface, the web (12) cutting a thread (18) in the inner surface of the rivet sleeve (3) in the riveted state during the setting procedure as a result of a previous pulling-rotating movement produced by the rivet setting device,
**characterised in that** a broaching edge (10) projecting beyond the cylindrical surface of the rivet pin (1) is arranged on the rivet pin (1) between the head (2) and the web (12) transverse to the longitudinal extension of the helically extending web (12) and during the setting process at least partially deforms the thread (18) cut in the inner surface of the rivet sleeve (3) by the web (12).

2. Blind rivet according to claim 1, **characterised in that** the broaching edge (10) is formed by a widened diameter region (9) on the rivet pin (1), whose radial extension substantially corresponds to the height of the web (12).

3. Blind rivet according to claim 1, **characterised in that** the broaching edge (10) is formed by a widened polygonal region (19) on the rivet pin (1), whose central radial extension substantially corresponds to the height of the web (12).

4. Blind rivet according to claim 1, **characterised in that** the broaching edge (10) is formed by a keyway profile region on the rivet pin (1), whose grooves are arranged as a helical extension of the web (12).

5. Blind rivet according to one of claims 1 to 4, **characterised in that** a plurality of broaching edges (10) are arranged axially offset on a region (20) on the rivet pin (1).

6. Blind rivet according to one of claims 1 to 5, **characterised in that** the web (12) forms a substantially wedge-shaped, self-tapping external thread with substantially sharp cutting edges.

7. Blind rivet according to one of claims 1 to 6, **characterised in that** the web (12) is constructed as a triangle in its plan view, whose apex points away from the head (2) of the rivet pin (1).

8. Blind rivet according to one of claims 1 to 7, **characterised in that** the web (12) is constructed as a triangle in its side view, whose apex points away from the head (2) of the rivet pin (1).

9. Blind rivet according to one of claims 1 to 8, **characterised in that** a plurality of webs (12) radially offset relative to one another is arranged on the outer cylindrical surface of the rivet pin (1).

10. Blind rivet according to one of claims 1 to 9, **characterised in that** the head (2) comprises a profile projecting radially on the rivet pin (1).

11. Blind rivet according to one of claims 1 to 10, **characterised in that** the region (9, 19, 20) supporting the broaching edge (10) is arranged at a distance from the underside of the head (2).

12. Blind rivet according to one of claims 1 to 11, **characterised in that** the broaching edge (10) and the web (12) are arranged spaced apart.

13. Blind rivet according to one of claims 1 to 12, **characterised in that** the rivet pin (1) comprises an intended breakage site (13) formed beneath the side of the web (12) remote from the head (2).

14. Blind rivet according to one of claims 1 to 13, **characterised in that**, on its end region remote from the head (2), the rivet pin (1) comprises profiling (8) for its accommodation in a rivet setting tool.

15. Blind rivet according to one of claims 1 to 14, **characterised in that** the rivet sleeve (3) comprises a radially projecting flange (4) and at its end remote from the flange (4) a bore region (6), which widens in step fashion and whose radial extension approximately corresponds to the height of the web (12).

16. Blind rivet according to one of claims 1 to 15, **characterised in that** the length of the bore extension (6) is selected such that, in the non-riveted state, the web (12) abuts against the end (14) of the bore region (6) and the broaching edge (10) is arranged outside the sleeve (3).

17. Blind rivet according to one of claims 1 to 16, **characterised in that** the head (2) is drawn in the riveted state into the interior of the rivet sleeve (3) and is enclosed in a substantially positive locking manner by the end region of the rivet sleeve (3).

18. Blind rivet according to one of claims 1 to 17, **characterised in that**, at its flange end, the rivet sleeve (3) comprises a constricted diameter region, which holds the rivet pin (1) in position with frictional locking in the non-riveted state.

19. Method for manufacturing a blind rivet connection, in which an axial tensile force and a rotational movement are simultaneously applied to the blind rivet by means of a rivet setting device in order to set the blind rivet, so that at least one helical web on the rivet pin cuts a thread in the inner surface of the rivet sleeve bore,
**characterised in that** a broaching edge on the rivet pin at least partially deforms the thread cut by the web in the inner surface of the rivet sleeve during the setting process.

20. Method according to claim 19,
**characterised in that** the broaching edge deforms or removes the material from the regions of the inner surface of the sleeve bore remaining adjacent to the threads, the deformed or removed material penetrating the threads and sealing same.

## Revendications

1. Rivet aveugle avec une douille de rivet (3) et avec une tige de rivet (1) agencée dans la douille de rivet (3), qui comporte une tête (2) et, au-dessous de sa tête (2), au moins une nervure (12) qui s'étend de façon hélicoïdale et qui est agencée sur sa surface latérale, la nervure (12) formant lors de l'opération de pose un sillon (18) dans la surface intérieure de la douille de rivet (3) à l'état rivé à cause d'un mouvement précédent de traction avec rotation provoqué par l'outil de pose de rivet, caractérisé en qu'un bord d'écartement (10) dépassant de la surface latérale de la tige de rivet (1) est agencé, transversalement par rapport à l'extension longitudinale de la nervure (12) hélicoïdale, sur la tige de rivet (1) entre la tête (2) et la nervure (12), ce bord d'écartement (10) déformant au moins partiellement, lors de l'opération de pose, le sillon (18) formé par la nervure (12) dans la surface intérieure de la douille de rivet (3).

2. Rivet aveugle selon la revendication 1, caractérisé en ce que le bord d'écartement (10) est formé sur la tige de rivet (1) par une zone au diamètre élargi (9) dont l'élargissement radial correspond sensiblement à la hauteur de la nervure (12).

3. Rivet aveugle selon la revendication 1, caractérisé en ce que le bord d'écartement (10) est formé sur la tige de rivet (1) par une zone polygonale élargie (19) dont l'élargissement radial moyen correspond sensiblement à la hauteur de la nervure (12).

4. Rivet aveugle selon la revendication 1, caractérisé en ce que le bord d'écartement (10) est formé sur la tige de rivet (1) par une zone profilée en forme de rainure de clavette dont les rainures sont agencées dans le prolongement hélicoïdal de la nervure (12).

5. Rivet aveugle selon l'une des revendications 1 à 4, caractérisé en ce que plusieurs bords d'écartement (10) sont agencés, décalés axialement, sur une certaine zone (20) de la tige de rivet (1).

6. Rivet aveugle selon l'une des revendications 1 à 5, caractérisé en ce que la nervure (12) constitue un filet extérieur sensiblement en forme de coin et auto-coupant avec une arête de coupe sensiblement tranchante.

7. Rivet aveugle selon l'une des revendications 1 à 6, caractérisé en ce que la nervure (12) est conçue en vue de dessus comme un triangle dont la pointe s'éloigne de la tête (2) de la tige de rivet (1).

8. Rivet aveugle selon l'une des revendications 1 à 7, caractérisé en ce que la nervure (12) est conçue en vue de côté comme un triangle dont la pointe s'éloigne de la tête (2) de la tige de rivet (1).

9. Rivet aveugle selon l'une des revendications 1 à 8, caractérisé en ce que plusieurs nervures (12) décalées radialement les unes par rapport aux autres sont agencées sur la surface latérale de la tige de rivet (1).

10. Rivet aveugle selon l'une des revendications 1 à 9, caractérisé en ce que la tête (2) présente un profil dépassant radialement de la tige de rivet (1).

11. Rivet aveugle selon l'une des revendications 1 à 10, caractérisé en ce que la zone (9, 19, 20) comprenant le bord d'écartement (10) est agencée à une certaine distance du dessous de la tête (2).

12. Rivet aveugle selon l'une des revendications 1 à 11, caractérisé en ce que le bord d'écartement (10) et la nervure (12) sont agencés à une certaine distance l'un de l'autre.

13. Rivet aveugle selon l'une des revendications 1 à 12, caractérisé en ce que la tige de rivet (1) comporte un point destiné à la rupture (13) formé au-dessous du côté de la nervure (12) qui est opposé à la tête (2).

14. Rivet aveugle selon l'une des revendications 1 à 13, caractérisé en ce que la tige de rivet (1) comporte à son extrémité opposée à la tête (2) un profil (8) destiné à sa réception dans un outil de pose de rivet.

15. Rivet aveugle selon l'une des revendications 1 à 14, caractérisé en ce que la douille de rivet (3) comporte une bride (4) dépassant radialement et, à son extrémité opposée à la bride (4), une zone alésée (6) qui s'élargit en formant une marche et dont l'élargissement radial correspond environ à la hauteur de la nervure (12).

16. Rivet aveugle selon l'une des revendications 1 à 15, caractérisé en ce que la longueur de la zone alésée (6) est choisie telle que, à l'état non rivé, la nervure (12) bute contre l'extrémité (14) de la zone alésée (6) et le bord d'écartement (10) est agencé en dehors de la douille (3).

17. Rivet aveugle selon l'une des revendications 1 à 16, caractérisé en ce que la tête (2) à l'état rivé est tirée à l'intérieur de la douille de rivet (3) et est entourée sensiblement de façon mécanique par l'extrémité de la douille de rivet (3).

18. Rivet aveugle selon l'une des revendications 1 à 17, caractérisé en ce que la douille de rivet (3) comporte à son extrémité formant la bride une zone au diamètre rétréci qui maintient en position par friction la tige de rivet (1) à l'état non rivé.

19. Procédé de fabrication d'un assemblage à rivet aveugle, selon lequel une force de traction axiale et en même temps un mouvement de rotation sont exercés sur le rivet aveugle pour la pose du rivet aveugle par un outil de pose de rivet, de telle sorte qu'au moins une nervure hélicoïdale sur la tige de rivet produit un sillon dans la surface intérieure de l'alésage de la douille de rivet, caractérisé en ce qu'un bord d'écartement sur la tige de rivet déforme au moins partiellement le sillon formé par la nervure dans la surface intérieure de la douille de rivet lors de l'opération de pose.

20. Procédé selon la revendication 19, caractérisé en ce que le bord d'écartement déforme ou enlève la matière des zones, restant à côté des sillons, de la surface intérieure de l'alésage de la douille, la matière déformée ou enlevée étant introduite dans les sillons et les bouchant.
